# EUROPEAN PATENT SPECIFICATION

(11) **EP 0 445 744 B1**
(45) Date of publication and mention of the grant of the patent: **05.06.1996**
(21) Application number: 91103338.9
(22) Date of filing: 05.03.1991
(51) Int. Cl.: C08J 7/04, C08L 67/02

(54) **Laminated polyester film**
Mehrschichtfolie aus Polyester
Film de polyester stratifié

(30) Priority: 07.03.1990 JP 56213/90
(43) Date of publication of application: 11.09.1991
(73) Proprietor: DIAFOIL HOECHST CO., LTD, Bunkyo-ku Tokyo (JP)
(72) Inventor: Okajima, Nariaki, Yokohama-shi, Kanagawa-ken (JP); Takeda, Naohiro, Yokohama-shi, Kanagawa-ken (JP); Ozaki, Yoshihide, Machida-shi, Tokyo (JP)
(74) Representative: TER MEER - MÜLLER - STEINMEISTER & PARTNER

(56) References cited:
- EP-A- 0 356 054
- GB-A- 1 388 083
- US-A- 4 089 997
- US-A- 4 310 600

## Description

The present invention relates to a laminated polyester film comprising an antistatic layer and a silicone resin layer.

Laminates of a polyester film and a silicone resin layer are widely used as surface-hardening films, release films or slippery films, in accordance with the property of the silicone resin, and an antistatic property is important in laminates as in general plastic films.

As a method for obtaining an antistatic property. a method of mixing a compound having an antistatic property with a silicone resin has already been proposed. The method of mixing a compound having an antistatic property, however, involves problems that the crosslinking reactivity for forming a silicone resin layer is lowered, that the properties of the silicone resin layer such as transparency, surface hardness, releasability and slipperiness are deteriorated. and that the antistatic compound transfers to another base material with frequent use, thereby not only lowering the antistatic effect on the silicone resin layer but also contaminating the base material.

GB-A-1 388 083 describes a photographic element comprising a layer of a light-sensitive silver halide emulsion, and a separate non-light-sensitive layer comprising at least one polymer having cationic nitrogens in the main chain thereof.

The use of silicone containing layers on polyesters to improve the abrasion resistance, reduce the coefficient of friction or improve the release properties of such films is known from US-A-4 310 600 and EP-A-0 356 054.

As a result of studies undertaken by the present inventors so as to solve the above-described problems, it has been found that it is possible to obtain a laminated polyester film having an excellent antistatic property without deteriorating the properties of the silicone resin layer and having an improved adhesion between the antistatic and silicone release layers by combining an antistatic layer comprising a specific polymer and the silicone resin layer. The present invention has been achieved on the basis of this finding.

According to the present invention, there is provided a laminated polyester film which comprises (1) a film comprising a base polyester film and at least one polymer layer (A) comprising (a) a polymer having cationic nitrogens in the main chain thereof and (b) a binder polymer on one or both surfaces of said base polyester film, and (2) at least one polymer layer (B) comprising a silicone compound on one or both surfaces of said film comprising the base polyester film and said at least one polymer layer (A), wherein said binder polymer is one selected from the group consisting of water- soluble polymers and water-dispersible organic polymers, said water-soluble polymers is at least one selected from the group consisting of polyvinyl alcohol, polyacrylamide, polyalkylene glycol, polyalkylene imine, polyvinyl pyrrolidone, methyl cellulose, hydroxy ethyl cellulose, starch, saccharides and proteins, and said water-dispersible organic polymers is at least one selected from the group consisting of polyester, polyacrylate, polyurethane, polyamide, chlorine-containing polymers, polyolefin and styrene butadiene rubber.

As the polyester which composes the base polyester film, polyethylene terephthalate comprising 80 mol% or more of ethylene terephthalate unit and 20 mol% or less of the other copolymerized unit, polyethylene naphthalate comprising 80 mol% or more of polyethylene naphthalate unit and 20 mol% or less of the other copolymerized unit, or poly-1,4-cyclohexanedimethylene terephthalate comprising 80 mol% of more of 1,4-cyclohexanedimethylene terephthalate unit and 20 mol% or less of the other copolymerized unit may be used.

The base polyester film may contain inorganic particles, organic particles, an organic lubricant, an antisatic agent, a stabilizer, a dye, pigments, and an organic polymer, as occasion demands. Although fine particles are contained in base polyester films in order to impart slipping properties to the base polyester films, the type, size, and amount of the projection forming agent (fine particles) are appropriately selected in accordance with such properties and transparency demands for the product used.

As an example of the polymer having cationic nitrogens in the main chain thereof used in the present invention, an ionene polymer may be mentioned. The ionene polymer is described in detail in Chapter 4 "IONENE POLYMERS: PREPARATION, PROPERTIES AND APPLICATIONS", ALAN D. WILSON AND HAVERD J. PROSSER (Ed.) "DEVELOPMENTS IN IONIC POLYMERS-2" ELSEVIER APPLEID SCIENCE PUBLISHERS, pp. 163-189, issued in 1986.

Especially, an ionene polymer having a constitutional unit represented by the following formula (I) or (II) is preferably used: 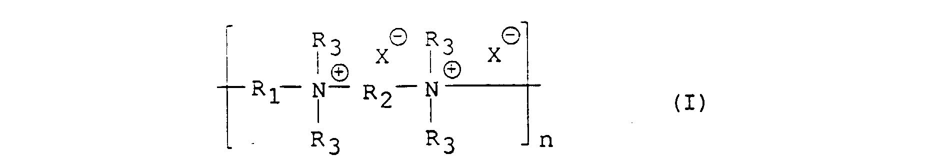 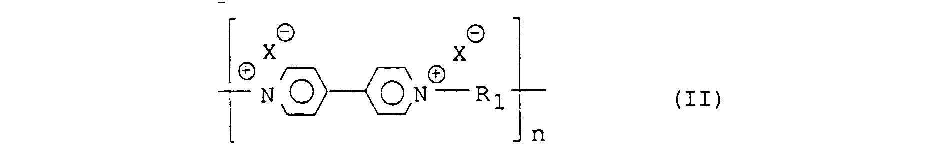 wherein X is bromine or chlorine; R₁ and R₂ independently represent alkylene groups, arylene groups, xylylene groups, divalent groups (A) derived from compounds selected from the group consisting of ethers, urea and derivatives thereof, piperadine and derivatives thereof, diacetoxypropane and derivatives thereof, and diethylbenzene, or divalent groups (B) derived from compounds selected from the group consisting of polyacrylates, polyesters, polyurethanes, polyolefins, halogenated polyolefins and polyethylene glycol; said alkylene groups, said arylene groups, said xylylene groups and said divalent groups (A) may be substituted by a hydroxy group or a monovalent group derived from a compound selected from the group consisting of esters, ethers, alcohols, amides, urethanes and ketones; R3 rpresents methyl or ethyl and n is an integer.

More preferably, an ionene polymer having a constitutional unit represented by the following formula (III) is used: 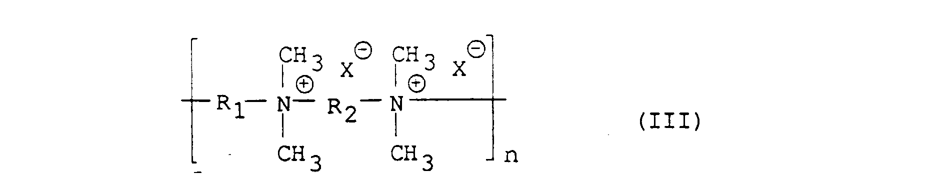 wherein X is bromine or chlorine; R₁ and R₂ independently represent C₁-C₄ alkylene groups, phenylene groups, xylylene groups, divalent groups derived from compounds selected from the group consisting of diethylethers and dipropylurea, and propylene groups substituted by a hydroxy group and n is an integer.

As a method of synthesizing ionene polymers, the reactions described below which are described in the above publication can be employed, but the method is not limited to them.
(1) 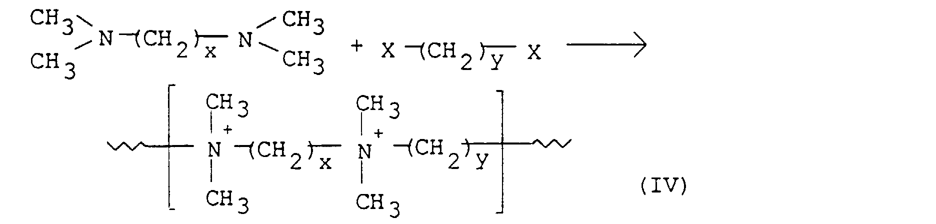 wherein X is a halogen element such as Br or Cl, x and y are respectively any desired integer of 1 or more and may be either the same of different.
(2) 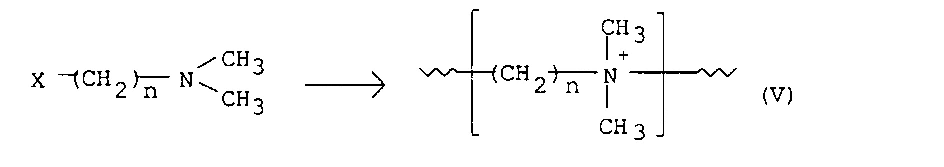 wherein X is a halogen element such as Br or Cl and n is any desired integer of 1 or more.
(3) 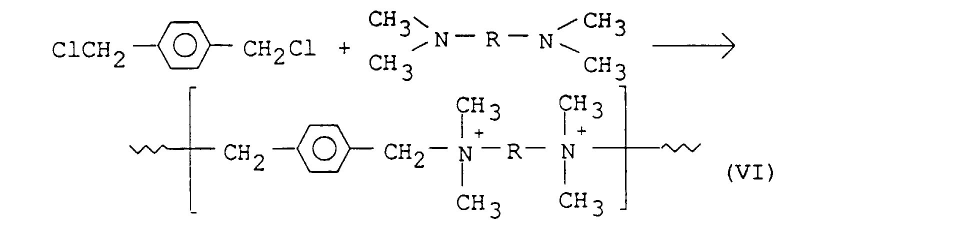 wherein R is the same divalent group as defined for R₁ and R₂ in formula (I).
(4) 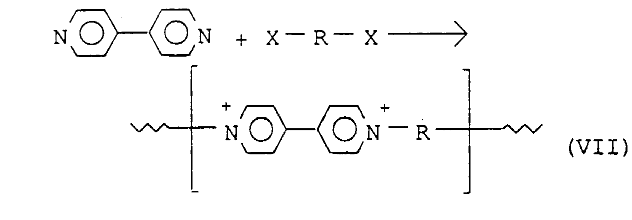 wherein X is a halogen element such as Br or Cl and R is the same divalent group as defined for R₁ and R₂ in formula (I).
(5) 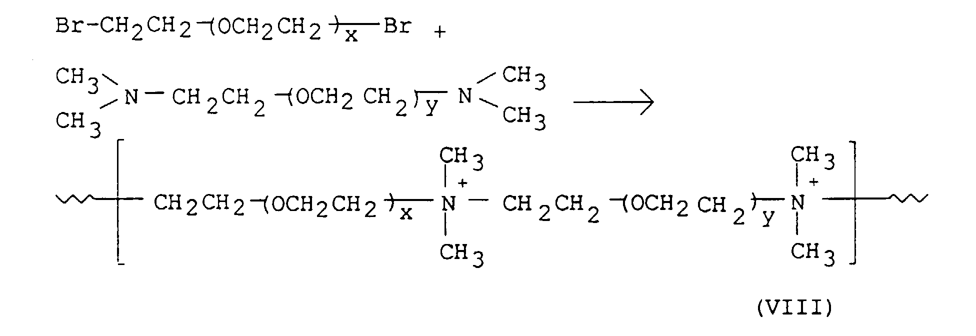 wherein x and y are respectively integers of 1 to 4.
(6) 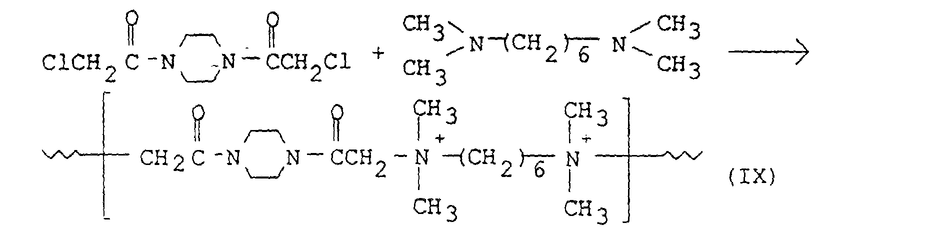
(7) 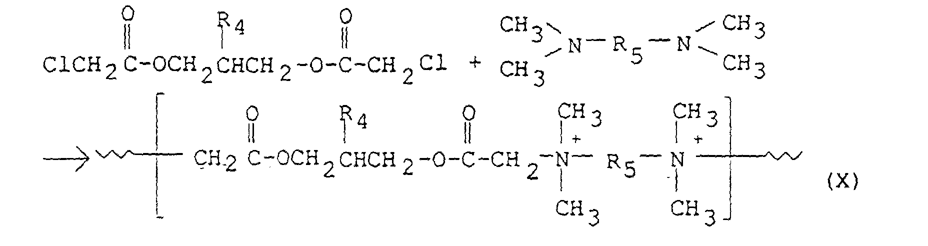 wherein R₄ is a monovalent group derived from any desired organic compound which may contain various functional groups and R₅ is a divalent group derived from any desired organic compound.
(8) 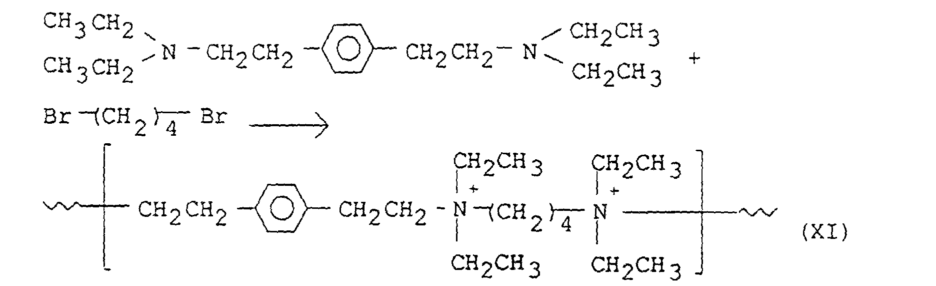
(9) 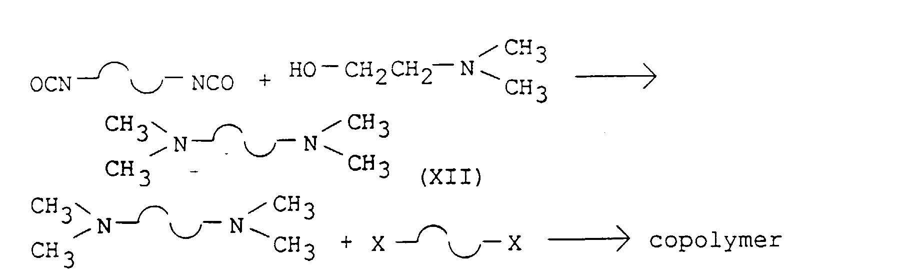 wherein X is a halogen element such as Br or Cl, 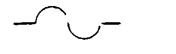 is a divalent group derived from various polymers and oligomers or the same divalent group as defined for R₁ and R ² in formula (I).

Examples of ionene polymers and derivatives thereof include the compounds disclosed in Japanese Patent Pubilication Nos. 53-23377 and 54-10039 and Japanese Patent Application Laid-Open (KOKAI) Nos. 47-34581, 56-76451, 58-93710, 61-18750 or 63-68687. The ionene polymers used in the present invention are not limited to these compounds. Examples of commercially available ionene products include the polymers having the structures given in Table 1 described below which are produced by Nihon Kasei Co. Ltd., but the ionene polymer products used in the present invention are not limited to these products.

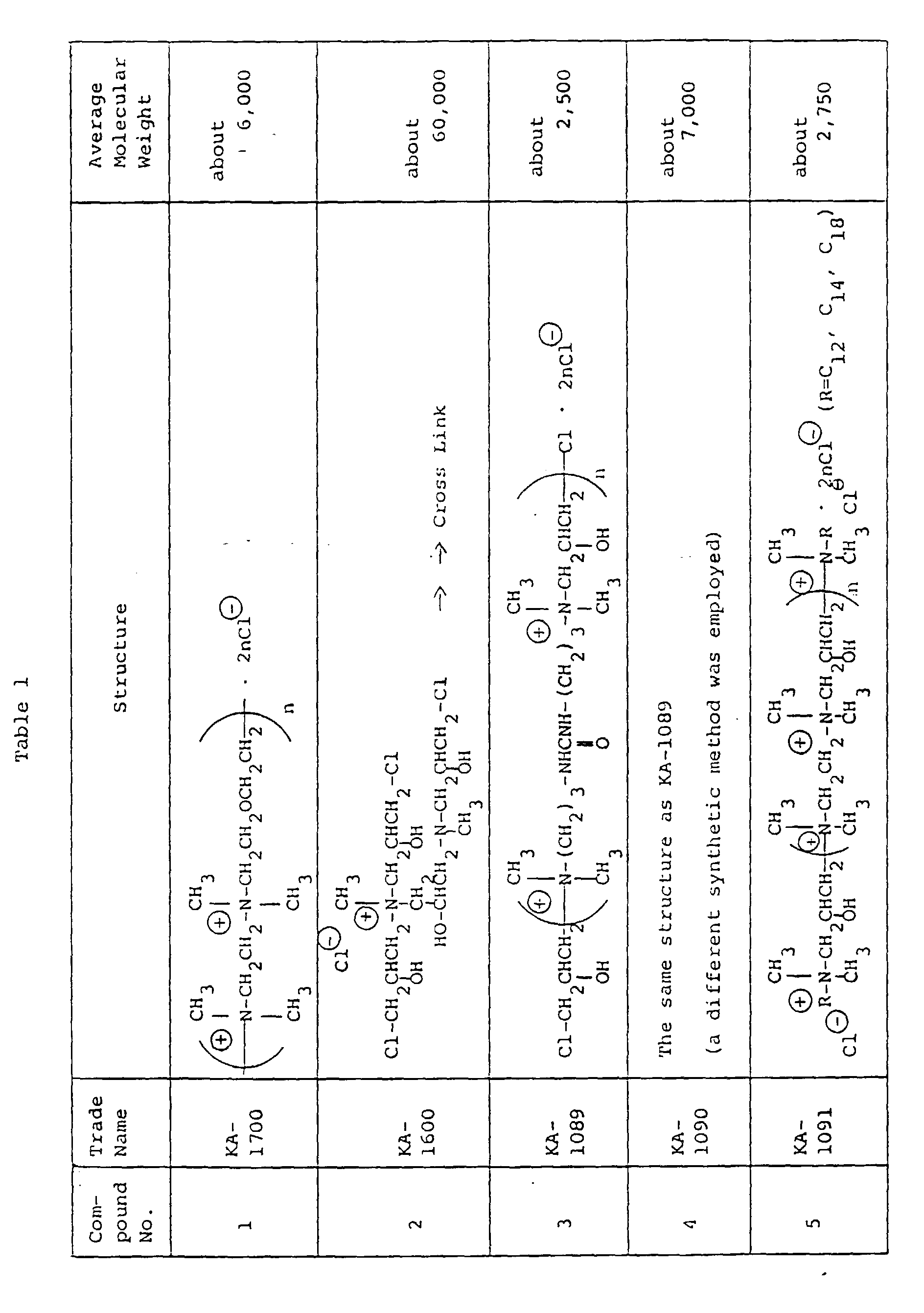

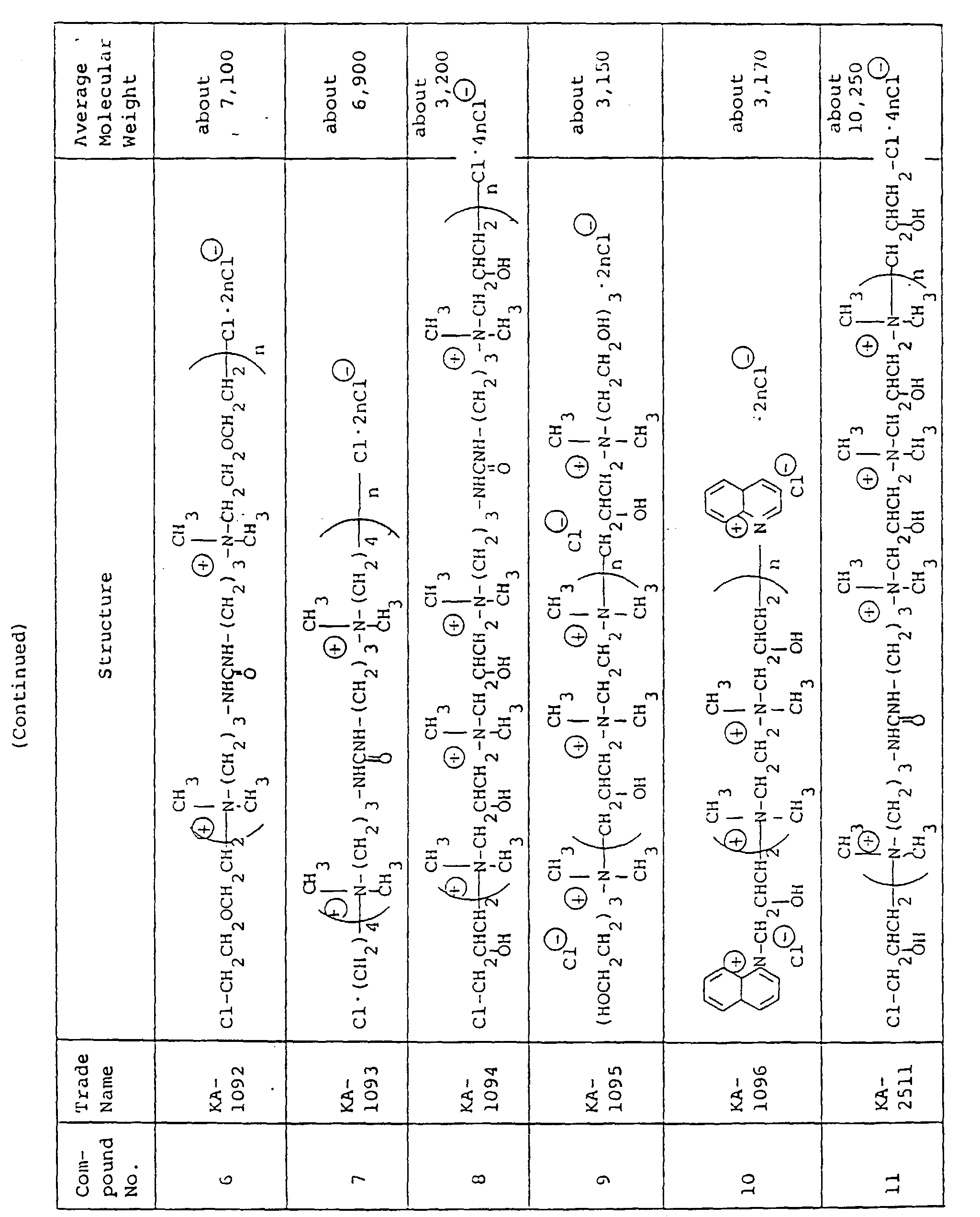

The polymer having cationic nitrogens in the main chain thereof used in the present invention has preferably a molecular weight of 1,000 to 100,000, more preferably 2,500 to 60,000.

The polymer layer (A) contains an antistatically effective amount of the polymer having cationic nitrogens in the main chain thereof. Ordinarily, the content of the polymer having cationic nitrogens in the main chain thereof in the polymer layer (A) is 5 to 95 wt%, preferably 10 to 50 wt%.

The binder polymer (b) is a nonionic,-cationic or ampho-ionic water-soluble organic polymer or a water-dispersible organic polymer which is used in the form of a cationic, nonionic or ampho-ionic water dispersion (hydrosol).

Said water-soluble polymers is at least one selected from the group consisting of polyvinyl alcohol, polyacrylamide, polyalkylene glycol, polyalkylene imine, polyallylamine, polyvinylpyrrolidones, methyl cellulose, hydroxyethyl cellulose, starch, saccharides (e.g., gum arabic, dextran, pullulan), and proteins (e.g., glue, gelatin, casein).

Said water-dispersible organic polymers is at least one selected from the group consisting of polyacrylate, polyurethane, polyester, chlorine-containing polymers (e.g. polyvinylidene chloride, polyvinyl chloride, chlorinated polyolefin,-vinyl chloride-vinyl acetate copolymer, or chloroprene, ), polyamide, styrene-butadiene rubber, polyolefin and modified polymers thereof.

Among these, when a water dispersion of polyacrylate, polyurethane, polyester, or a chlorine-containing polymer is used, the adhesion between the layer containing the binder polymer (the polymer layer (A)) and the layer containing a silicone compound (the polymer layer (B) such as a UV curable coating containing a silicone, becomes more excellent.

The water dispersion of the organic polymer may be obtained by dispersing the polymer which is modified to be hydrophilic by copolymerization with using a nonionic, cationic or ampho-ionic component as one of the comonomers. Also, the water dispersion may be obtained by forced emulsification of the polymer in the presence of a nonionic, cationic or ampho-ionic surfactant or by emulsion polymerization in the presence of a nonionic, cationic or ampho-ionic surfactant.

As these polymers, a copolymer such as a random copolymer, a block copolymer and a graft copolymer or an aggregate of different polymers may be used. Examples of the copolymer include polyurethene-graft-polyacrylate and polyester-graft-polyacrylate which can be obtained by emulsion polymerization of acryl monomers in the presence of an aqueous solution or water dispersion of polyurethane or polyester.

The content of the binder polymer in the polymer layer (A) is 5 to 95 wt%, preferably 60 to 80 wt%.

The amount of the binder polymer in the polymer layer (A) is preferably 50 to 2,000 parts by weight, based on 100 parts by weight of the polymer having cationic nitrogens in the main chain thereof.

The polymer layer (A) is formed by dissolving or dispersing the polymer having cationic nitrogens in the main chain thereof (a) and the binder polymer (b) in a medium to obtain a coating solution, coating a film with the coating solution and drying the coated film. The medium for the coating solution is preferably water, and an organic solvent such as an alcohol, Cellosolve, N-methylpyrrolidone may be mixed with the coating solution in order to improve the cohesion stability of the coating, the application property of the coating to the polyester film or the film-forming property of the coating. Water is preferable as the means for the coating solution from the point of view of the operation safety on the coating applicator is maintained, an organic solvent may be used singly. The concentration of the polymers in the medium may be adjusted so that the coating solution can be easily coated on a polyester film without any particular limit.

The applicator of the above-described coating solution is exemplified by a reverse-roll coater, a gravure coater, a rod coater and an air doctor coater which are described in "Coating Method" by Yuji Harasaki, published by Maki Shoten in 1979, but it is not restricted thereto.

A method of coating the coating solution is not specified, but a "in-line coating method" in which the coating solution is coated during the production of a polyester film is known as a method of forming a high-quality coating layer at a low cost. Examples of the in-line coating method include a method in which a coating solution is coated on a non-stretched polyester film and the polyester film is then biaxially stretched successively or simultaneously; a method in which a coatng solution is coated on a monoaxially stretched polyester film and then stretched in the direction perpendicular to the direction of the previous monoaxial stretching; a method in which a coating solution is coated on a biaxially stretched polyester film and then further stretched in the transverse and/or machine direction.

The above-described stretching process is preferably carried out at 60 to 130°C, and the stretch ratio is at least 4 times, preferably 6 to 20 times, in terms of ratio by area. The stretched film is subjected to heat treatment at 150 to 250°C.

It is preferable that the stretched film is then 0.2 to 20% relaxed in the machine and transverse directions in the zone at the highest temperature of the heat treatment and/or a cooling zone at the outlet of the heat treatment.

A preferable method is a method in which a coating solution is coated on a monoaxially stretched polyester film which is 2 to 6 times stretched by a roll stretching method at 60 to 130°C, and the monoaxially stretched polyester film is then 2 to 6 times stretched at 80 to 130°C in the direction perpendicular to the direction of the previous stretching after it has been appropriately dried or immediately after the coating without drying, and is subjected to heat treatment at 150 to 250°C for 1 to 600 seconds.

The coating solution used in the present invention may be coated on either only one surface of the polyester film or both surfaces thereof. When the coating solution is coated on only one surface, a coating layer is formed on the other surface by using a coating solution other than the coating solution used in the present invention, as occasion demands, so that other properties can be imparted to the polyester film of the present invention. In order to improve the coating properties of the coating solution on the film and the adhesion thereto, the film may be subjected to chemical treatment or discharge before coating. In addition, in order to improve the adhesion of the biaxially oriented polyester film of the present invention to the coating layer and the coating properties of the film, the coating layer may be subjected to discharge treatment after it has been formed.

According to the in-line coating method, since the drying of the coating layer simultaneously with stretching is possible, it is very advantageous in comparison with a method of separately carrying out the biaxially stretching process and the coating (or coating and drying) process in that (i) it is unnecessary to provide a drying furnace exclusively for that purpose and (ii) since the number of times for rewinding and winding the film is reduced by one time the contamination of the film with dust is reduced. In addition, since it is possible to reduce the thickness of the coating layer in accordance with the stretching ratio, this method is excellent as a method of laminating a thin film on a base polyester film.

In the case of producing an antistatic polyester film by the in-line coating method, however, since some antistatic agents are thermally unstable, if the film is coated and stretched under ordinary conditions, the antistatic agents may be evaporated or thermally decomposed, thereby making it impossible to exhibit the antistatic effect.

On the other hand, the heat treatment is carried out in the mild conditions, for example, at a lower temperature, in a shorter treatment time, althogh the evaporation and the decomposition of the antistatic agent are suppressed and the antistatic effect is produced, the mechanical strength or dimension stability of the film obtained are unsatisfactory in most cases. However, the polymer having cationic nitrogens in the main chain thereof in the present invention unexpectedly exhibit a stable antistaic effect, even after the film is satisfactorily subjected to the heat treatment.

The thus-produced polyester film on which the polymer layer (A) is formed preferably has a thickness within the range of 3 to 500 µm, and the thickness of the polymer layer (A) is preferably 0.01 to 5 µm, more preferably 0.02 to 1 µm. If the thickness of the polymer layer (A) is less than 0.01 µm, unevenness occurs in the polymer layer (A) of products because uniform coating layers cannot be easily obtained, while if the thickness is over 5 µm, the handling of the films produced becomes difficult owing to the deterioration in the slipping properties.

The coating solution for forming the polymer layer (A) preferably contains a crosslinking agent. Examples of the crosslinking agent include a alkylolated urea compound such as a methylolated urea compound, melamine compound, guanamine compound, acrylamide compound, polyamide compound, an epoxy compound, an aziridine compound, a block polyisocyanate, a silane coupling agent, a titanium coupling agent, a zirco-aluminate coupling agent, a heat-, peroxide- and light-reactive vinyl compound or photosensitive resin. The crosslinking agent may be combined with the binder polymer in advance, for example, in the case that at least one of the monomers of the binder polymer is a crosslinking agent or that a functional group in the binder polymer is reacted with the crosslinking agent. By addition of the crosslinking agent, anti-blocking property, water resistance, solvent resistance, adhesion between the binder polymer layer and an upper coating layer, and mechanical strength of the coating layer are improved. Consequently, when an upper coating layer is coated on the coating layer, antistatic property is also exhibited on the upper coating layer. In addition, the antistatic property is improved as well as the adhesion with the upper coating layer.

The content of the crosslinking agent is 0 to 10,000 parts by weight, preferably 5 to 200 parts by weight, based on 100 parts by weight of the polymer having cationic nitrogens in the main chain thereof.

The coating solution may contain particles of an inorganic compound such as silica, silica sol, alumina, alumina sol, zirconium sol, kaolin, talc, calcium carbonate, titanium oxide, a barium salt, carbon black, molybdenum sulfide or antimony oxide sol for the purpose of improving the anti-blocking properties and slipping properties.

The content of the inorganic particles is 0 to 1,000 parts by weight, preferably 0.01 to 500 parts by weight, based on 100 parts by weight of the polymer having cationic nitrogens in the main chain thereof.

Further, the coating solution may contain an antifoaming agent, a coating properties modifier, a thickening agent, an organic lubricant, organic polymer particles, an antioxidant, an ultraviolet absorber, a foaming agent or a dye, as occasion demands. The coating solution may also contain a polymer other than the polymers in the present invention in order to improve the properties of the coating solution or the coating layer.

The silicone compound which is contained in the polymer layer (B) is a compound which is mainly composed of organopolysiloxane, such as silicone oil, silicone rubber and silicone resin.

The organopolysiloxane may be straight-chain or crosslinked. The structure and degree of the crosslinking are appropriately selected depending upon the purpose of use. For example, a high degree of crosslinking is not always necessary for the purpose of obtaining the slipperiness or the releasability, and it is necessary to enhance the degree of crosslinking in the case that it is used for surface hardening in which the scuff resistance is required.

Examples of the silicone compound include condensates of organoalkoxysilane, such as polydimethylsiloxane and an organopolysiloxane represented by the following formula:

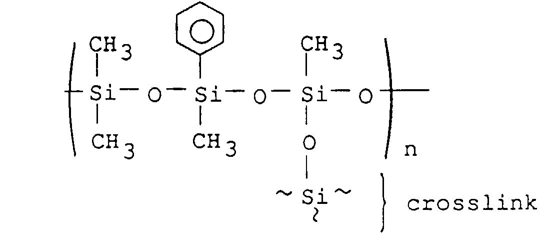

Especially, an organopolysiloxane having a three-dimensional crosslinked structure which is produced by the self condensation of silanol obtained by the hydrolysis of organoalkoxysilane is preferable.

According to the description at pp. 30 to 39 of "Functional Materials", July (1987), structural units of the organopolysiloxane are represent by the following four types of structural units:

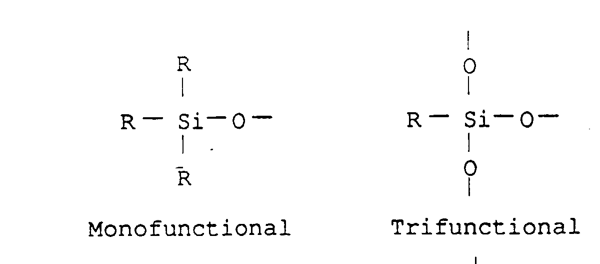

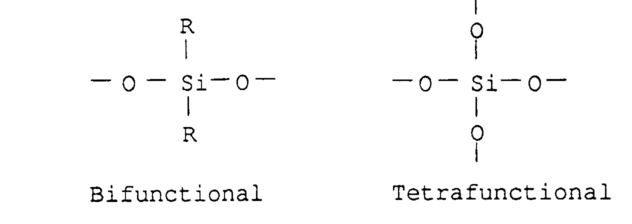

Organopolysiloxanes have various structures which are represented by combination of these structural units. Especially, when an organopolysiloxane is used for the purpose of improving the surface hardness, a three-dimensional reticulate polysiloxane having a structure represented by the combination of trifunctional structural units and tetrafunctional units such as shown below is preferable:

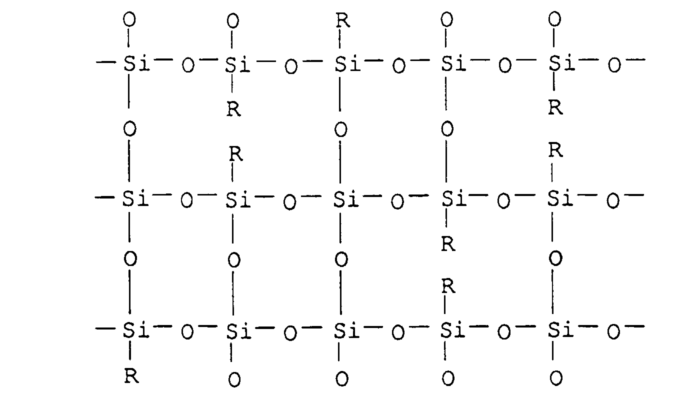

There are three types of organopolysiloxane:
(1) organopolysiloxane in which all the substituents R are aliphatic or aromatic hydrocarbon residues,
(2) organopolysiloxane in which a part of the substituents R are -H, -Cl, -OH or alkoxy and active against hydrolysis and condensation (silicon functional silane),
(3) organopolysiloxane in which a part of the substituents R are organic functional groups such as -CH=CH₂, 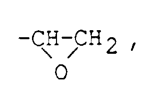 -CH₂NH₂, -OOC-C (CH₃) =CH₂, -CH₂-Cl and -CH₂SH (carbon functional silane).

A carbon functional silane is known as a silane coupling agent.

A carbon functional silane has a specific nature due to possession of both organic combination and inorganic combination. Since a silicon functional silane has few organic combinations, it has poor adhesion with a plastic base and it is brittle in spite of the high surface hardness. In contrast, a carbon functional silane is excellent in the adhesion with a plastic base as is obvious from examples in which it is used itself as a primer for improving the adhesion, and the surface hardness thereof is also excellent equally in various evaluations. On the other hand, a carbon functional silane is defective in that it is influenced by light, water or heat in some organic combinations and has problems in the durability of the coating film and in that curing reaction requires a higher temperature and a longer time than the curing reaction of a silicon functional silane.

In consideration of the properties, a suitable silicone compound is selected in accordance with the purpose of the use.

A silicone compound can be used as a releasing agent with reference to, for example, "Adhesion" vol. 28, No. 11, pp. 484-489 (1984).

Silicone compounds are commercially available as the products of Dow Chemical, Shin-etsu Chemical Industry Co., Ltd., Toshiba Silicone Co., Ltd., Toray Silicone Co., Ltd., Sumitomo Chemical Co., Ltd., Daicel Ltd., or Nihon Seika, Daihachi Chemical Ind. Corp. These products are usable for the polymer layer (B) in the present invention but the polymer layer (B) is not restricted thereto.

The polymer layer (B) contains an effective amount of the silicone compound for exhibiting slipperiness, releasability and heat resistance. Ordinarily, the content of the silicone compound in the polymer layer (B) is 1 to 100 wt%.

The polymer layer (B) may contain an organic polymer. Especially, when a low-molecular weight silicone compound such as silicone oil is used, the use of the organic polymer is preferable.

Examples of the organic polymer include polyester, polyacrylate, polyurethane, polyamide, polyimide, styrene-butadiene rubber (SBR), acrylonitrile-butadiene rubber (NBR), polyvinyl acetate, a chlorine-containing polymer (e.g., polyvinylidene chloride, polyvinyl chloride, vinyl chloride-vinyl acetate copolymer, chlorinated polyethylene).

The content of the organic polymer in the polymer layer (B) is preferably 0 to 99 wt%. Especially, when the organic polymer is used with a low-molecular weight silicone compound (having a molecular weight of not more than about 1,000), the content of the organic polymer in the polymer layer (B) is preferable 70 to 99 wt%.

The amount of the organic polymer in the polymer layer (B) is preferably 0 to 10,000 parts by weight, based on 100 parts by weight of the silicone compound.

The polymer layer (B) may contain a catalyst, a crosslinking agent, organic or inorganic fine particles, an application property modifier, a coloring agent, a stabilizer or a lubricant, if necessary.

The polymer layer (B) may be formed by coating a coating solution containing the above-described silicone compound by a conventional method. For example, methods which are described in "The Coating Process" by Yuji Harasaki are mentioned. Also, the polymer layer (B) may be laminated by an in-line coating method in the same way as in the polymer layer (A).

After the coating, the coating layer may be subjected to heat treatment (heat curing) so as to enhance the degree of crosslinking of the silicone compound(s). The heat treatment is ordinarily carried out at 80 to 170°C and for 1 to 120 seconds.

In addition, the polymer layer (B) may be formed by coating a coating solution containing organosilicon compounds and crosslinking the organosilicon compounds.

As an example of the coating solution containing organosilicon compounds, a silicone coating which is mainly composed of a trifunctional component such as methyltrimethoxysilane is mentioned. When the silicone coating is mainly composed of the trifunctional component, it can be modified to impart flexibility to the coating layer by an addition of a bifunctional compound such as dimethyldimethoxysilane to enhance the hardness of the coating layer by an addition of a tetramethoxysilane. A method of enhancing the hardness by adding colloidal silica to methyltrimethoxysilane has recently been proposed.

The thickness of the polymer layer (B) is preferably in the range of 0.03 to 5 µm, more preferably in the range of 0.05 to 1 µm. A thickness of less than 0.03 µm tends to be too small to provide sufficient properties. A thickness of more than 5 µm tends to be unfavorable since the silicone compound tends to transfer due to insufficient curing.

The composite film of the present invention have the following five types of layer structures:
Polymer layer (B)/Polymer layer (A)/Base polyester film;
Polymer layer (A)/Base polyester film/Polymer layer (B);
Polymer layer (A)/Base polyester film/Polymer layer (A)/Polymer layer (B);
Polymer layer (B)/Base polyester film/Polymer layer (A)/Polymer layer (B); and
Polymer layer (B)/Polymer layer (A)/Base polyester film/Polymer layer (A)/Polymer layer (B).

Each of the above-described layers may be laminated through an intermediate layer which imparts an adhesion or various other properties. It is possible to laminate a layer which imparts other function to the composite film, for example, an adhesion modifying layer obtained by applying a water dispersion of polyurethane containing an anionic group, which is described in Japanese Patent Application Laid-Open (KOKAI) No. 62-97890 (1987).

The laminated polyester film of the present invention has excellent properties such as heat resistance, slipperiness, scuff resistance and releasability as well as antistatic property and can be used for various purposes, for example, as a thermal transfer film, a surface hardening or release film, a liner sheet for a tape cassette and a slip sheet.

### [Examples]

The present invention will be explained more in detail, while referring the following non-limitative examples.

Evaluations in the present invention were carried out in the following manner.

### (1) Transparency

The turbidity of the film was measured by a separate type turbidimeter (NDH-20D (trade name); produced by Nihon Denshoku Kogyo) in accordance with JIS-K6714 and the transparency was evaluated by the measured turbidity.

### (2) Friction coefficient

Two films each cut into a width of 15 mm and length of 150 mm were laminated on a flat glass plate. A rubber plate was placed on the upper film and a load was placed on the rubber plate. The two films were slipped on each other at a contact pressure of 196Pa (2 g/cm²) and a speed of 20 mm/min to measure the frictional force. The friction coefficient immediately before slipping was regarded as a static friction coefficient (µs) and the friction coefficient at the point which is 5 mm distant from the starting point was regarded as a dynamic frictional coefficient (µd). The measuring atmosphere was 23°C and 50% RH. .

### (3) Surface resistivity

A concentric electrode (16008A (trade name); produced by Yokokawa Hewlett Packard) having an inner electrode of 50 mm in diameter and an outer electrode of 70 mm in diameter was placed on the sample in an atmosphere of 23°C and 50% RH. A voltage of 100 V was applied between the electrodes to measure the surface resistivity of the sample by a high-resistance meter (4329A (trade name); produced by Yokokawa Hewlett Packard).

### (4) Ash test

The film was electrified by rubbing a finger covered with gauze along the surface of the sample in ten reciprocations in an atmosphere of 23°C and 50% RH. The sample was brought close to fine silica particles Siloid 150 (trade name; produced by Fuji Davisson) and the distance at which the fine particles was adsorbed by the film was measured. Judgment was made on the basis of the following criteria:
- 0 to 0.5 cm :: O (good)
- 0.5 to 2 cm :: A (rather good)
- not less than 2 cm:: × (poor)

When the coating film was damaged by the friction of the gauze, the antistatic effect was canceled. Therefore, this test also serves as the evaluation of the strength of the coating film.

### (5) Adhesive tape releasability

Cellophane tape having a width of 18 mm produced by Nichiban Co., Ltd. was pasted in a length of 7 cm on the surface of the film in such a manner as not to produce any air bubble between the tape and the surface of the film. A constant load was applied to the cellophane tape by a manual loading roll of 3 kg. Thereafter, the cellophane tape was manually torn off from one end and the releasability was evaluated on the basis of the following criteria:
- ○:: the tape was easily released without sound (good)
- ×:: the tape was released with strong resistance and sound (poor)

### Examples 1 to 4

Polyethylene terephthalate having an intrinsic viscosity of 0.65 was melt-extruded at a temperature of 280 to 300°C and cast on a cooling drum by an electrostatic contact method to obtain an amorphous film with a thickness of 415 µm. The film was then stretched by 3.3 times in the machine direction at 95°C and each of the coating solutions having compositions shown in Table 2 was coated on a surface of the stretched film. The substances of the abbreviations in Table 2 are shown in Table 3. Each of the coated films was stretched by 3.3 times in the transverse direction at 110°C and was subjected to heat treatment at 210°C. Each of the obtained films comprises a base polyester film having a thickness of 38 µm and a coating layer (polymer layer (A)) having a thickness shown in Table 2. Each of silicone resin coatings having compositions shown in Table 2 was then coated on the polymer layer (A) of the film. Each of the films was dried and subjected to heat treatment to obtain films comprising a silicone resin layer (polymer layer (B)) having a thickness of 0.06 µm. The properties of the films were evaluated and the results are shown in Table 4.

As shown in Table 4, the films obtained in Examples 1 to 4 were excellent in both antistatic property and releasability. The films had a haze of not more than 8% and no problem in practical use as to transparency. They were able to be used without any problem as the release films which were unlikely to attract dust and the liner sheets for tape cassettes. The liner sheet of a commercially available tape cassette was removed and one of the films of Examples 1 to 4 which were processed in to liner sheets was incorporated into the tape cassette such that the surface of the polymer layer (B) was in contact with the section of the magnetic tape. Any of the liner sheets had a good slipperiness with the magnetic tape and exhibited a stable traveling property. Since the films were unlikely to attract dust, there was little contamination in the process for processing the films into the liner sheets, the films did not attract dust in the tape cassette and exhibited a stable traveling property over a long period.

When polyacrylate was used as binder, the durability of the laminate was improved. The coating layers of the films in Examples 1 and 4 were not peeled off even if they were strongly rubbed by gauze at one hundred times.

### Comparative Example 1

Polyethylene terephthalate having an intrinsic viscosity of 0.65 was melt extruded at a temperature of 280 to 300°C and cast on a cooling drum by an electrostatic contact method to obtain an amorphous film having a thickness of 415 µm. This film was stretched by 3.3 times in the machine direction at 95°C and further stretched by 3.3 times in the transverse direction at 110°C. The thus-stretched film was heat treated at 210°C to obtain a biaxially oriented polyester film having a thickness of 38 µm. The film obtained was transparent but there was no antistatic property or releasability, as shown in Table 3.

### Comparative Example 2

A silicone resin coating (toluene/methylethyl ketone mixed solution) having a composition shown in Table 2 was coated to a surface of the film obtained in Comparative Example 1. After the film was dried, it was heat treated. Thus a polymer layer (B) having a thickness of 0.06 µm was laminated on the film. The substances of the abbreviations in Table 2 are shown in Table 3. The film obtained was excellent in releasability but poor in antistatic property, as shown in Table 4.

### Comparative Example 3

A coating solution having the composition shown in Table 2 was coated on a surface of the polyester film after being stretched in the machine direction and before being stretched in the transverse direction in Comparative Example 1. Thereafter, in the same way as in Comparative Example 1, a film consisting of a base polyester film having a thickness of 38 µm and a coating layer having a thickness of 0.15 µm was obtained. The film obtained was excellent in antistatic property. A silicone resin coating having the composition shown in Table 2 was then coated on the coating layer of the film. After the film was dried, it was heat treated. Thus a polymer layer (B) having a thickness of 0.06 µm was laminated on the film. The film obtained was excellent in releasability but poor in the antistatic property, as shown in Table 4. This is assumed to be due to the poor solvent resistance of the antistatic agent and the dispersion in the polymer layer (B).

### Comparative Example 4

The film was coated and stretched by using a coating solution having the composition shown in Table 2 in the same way as in Comparative Example 3. However, the film gave off a smell of amine while stretching the film in the transverse direction and heat setting it, and it was found that the nitrogen component in the antistatic agent was being decomposed and evaporated. The film obtained exhibited no antistatic property. A silicone resin coating having the composition shown in Table 2 was applied to the coating layer of the film and treated in the same way as in Comparative Example 3 to form the polymer layer (B) having a thickness of 0.06 µm. Only releasability was imparted to the film obtained, as shown in Table 4.

### Example 5

Polyethylene terephthalate having an intrinsic viscosity of 0.65 was melt extruded at a temperature of 280 to 300°C and cast on a cooling drum by an electrostatic contact method to obtain an amorphous film having a thickness of 55 µm. This film was stretched by 3.3 times in the machine direction at 95°C and a coating solution having the same composition as Example 4 shown in Table 2 was coated on a surface of the stretched film. The coated film was further stretched by 4.0 times in the transverse direction at 110°C and heat treated at 210°C to obtain a film consisting of a base polyester film having a thickness of 5 µm and a coating layer (polymer layer (A)) having a thickness of 0.15 µm. A toluene/methylethyl ketone mixed solution of an acrylsilicone graft polymer ("Aron GS-30"; produced by Toa Gosei Chemical Industry Co., Ltd.), which was obtained by the graft polymerization of a methyl methacrylate resin as the main chain and polydimethylsiloxane in the ratio of about 10 : 1, was coated on the polymer layer (A) of the film, heated and dried to form a polymer layer (B) having a thickness of 0.2 µm. The film obtained exhibited a good antistatic property. The surface of the film on the opposite side of the coating layer was subjected to hot-melt coating with a hot-melt ink consisting of paraffin wax and carbon black, to obtain an ink layer having a thickness of 3 µm, thereby producing an ink donor film for thermal transfer.

The ink donor film obtained was free from the problems such as the adhesion of the films due to static electricity, discharge and nonuniformity in ink coating during the lamination of the polymer layer (B) and the hot-melt ink and during processing. The ink donor film also exhibited a good antistatic property in the form of a roll and a stable traveling property. When the sticking property of the surface (the surface of the polymer layer (B)) of the film for thermal transfer which was in contact with the thermal head was evaluated by printing by a thermal printing apparatus produced by Matsushita Electronics Parts, Ltd. at a thermal head resistivity of 275 Ω, applied voltage of 13.7 V and a pulse width of 1.2 msec, no sticking phenomenon was observed. When the sticking property was evaluated the same way by printing by a facsimile machine (Telecopia Model 245; produced by fuji Xerox Co., Ltd.), no sticking phenomenon was observed. The traveling property at this time had not problem in practical use.

### Comparative Example 5

An ink donor film for thermal transfer was produced in the same way as in Example 5 except that no antistatic layer was laminated. The sticking preventive property as an ink donor film was almost the same as in Example 5, but the ink donor film was electrified so that the film easily stuck to the printed paper and the traveling property was slightly unstable. During processing of the film and after the film was made into a product, it was apt to be electrified and nonuniformity in ink coating was observed. Adhesion of dust caused a printing miss. Thus, the ink donor film was unsuitable for practical use.

### Examples 6 to 8

Laminated films were produced in the same way as in Example 1. In the same way as in Example 1, the polymer layer (A) was formed by the in-line coating method, and the polymer layer (B) was then laminated thereon. In Example 6, the polymer layer (A) was formed on a surface of the film and the polymer layer (B) was formed on the opposite side. In Example 7, the polymer layer (A) was formed on both side of the film by a in-line coating method and the polymer layer (B) was laminated on the polymer layer on a single side of the film. In Example 8, the polymer layers (B) were laminated on the polymer layers (A) on both sides of the film. In the films of Examples 6 to 8, the adhesive tape releasability on each surface of the polymer layers (B) formed thereon was good. In the ash test, the antistatic property was good and ash was difficult attract on each surface of the films in Examples 6 to 8. That is, the results of the ash test were good.

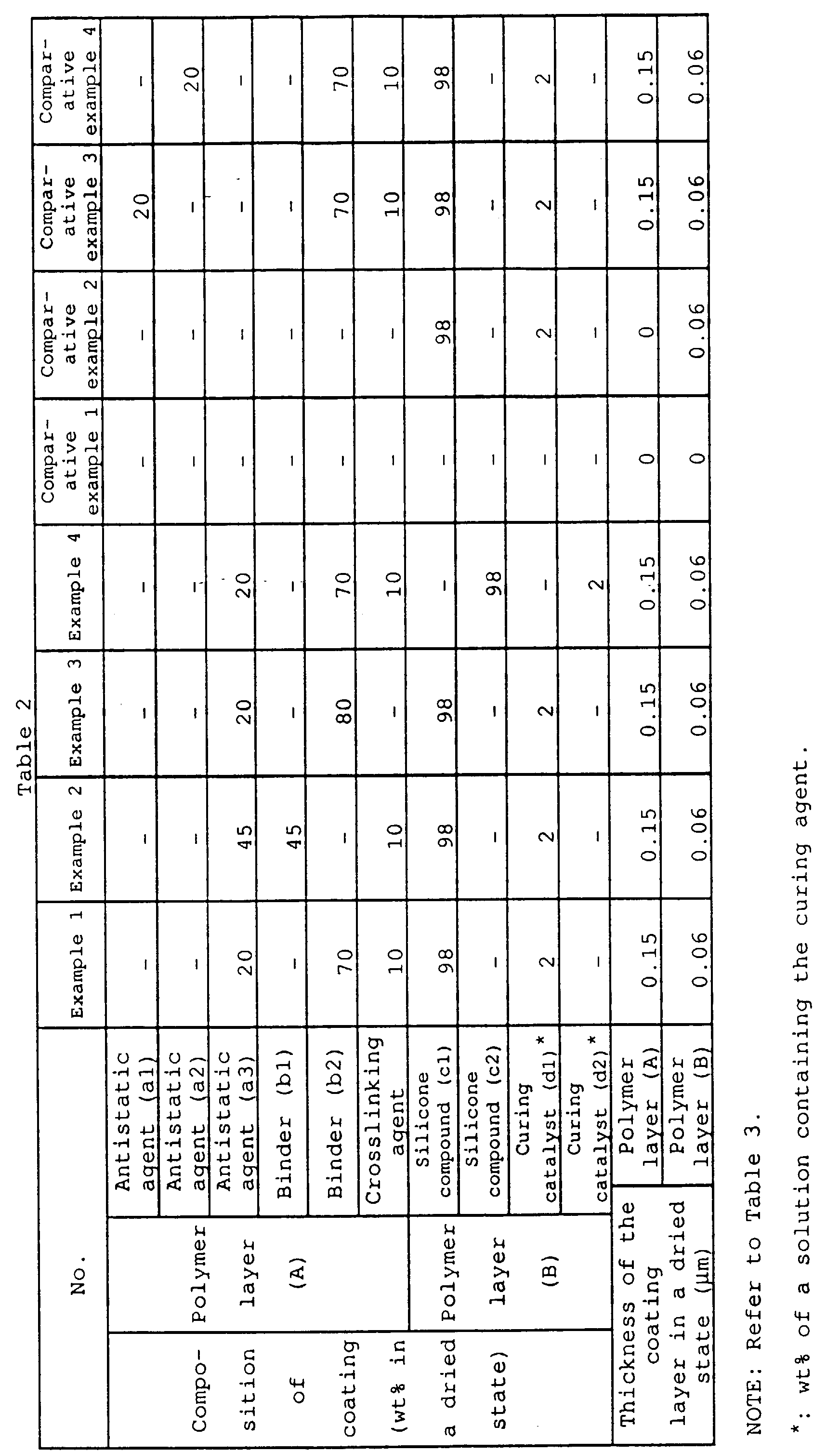

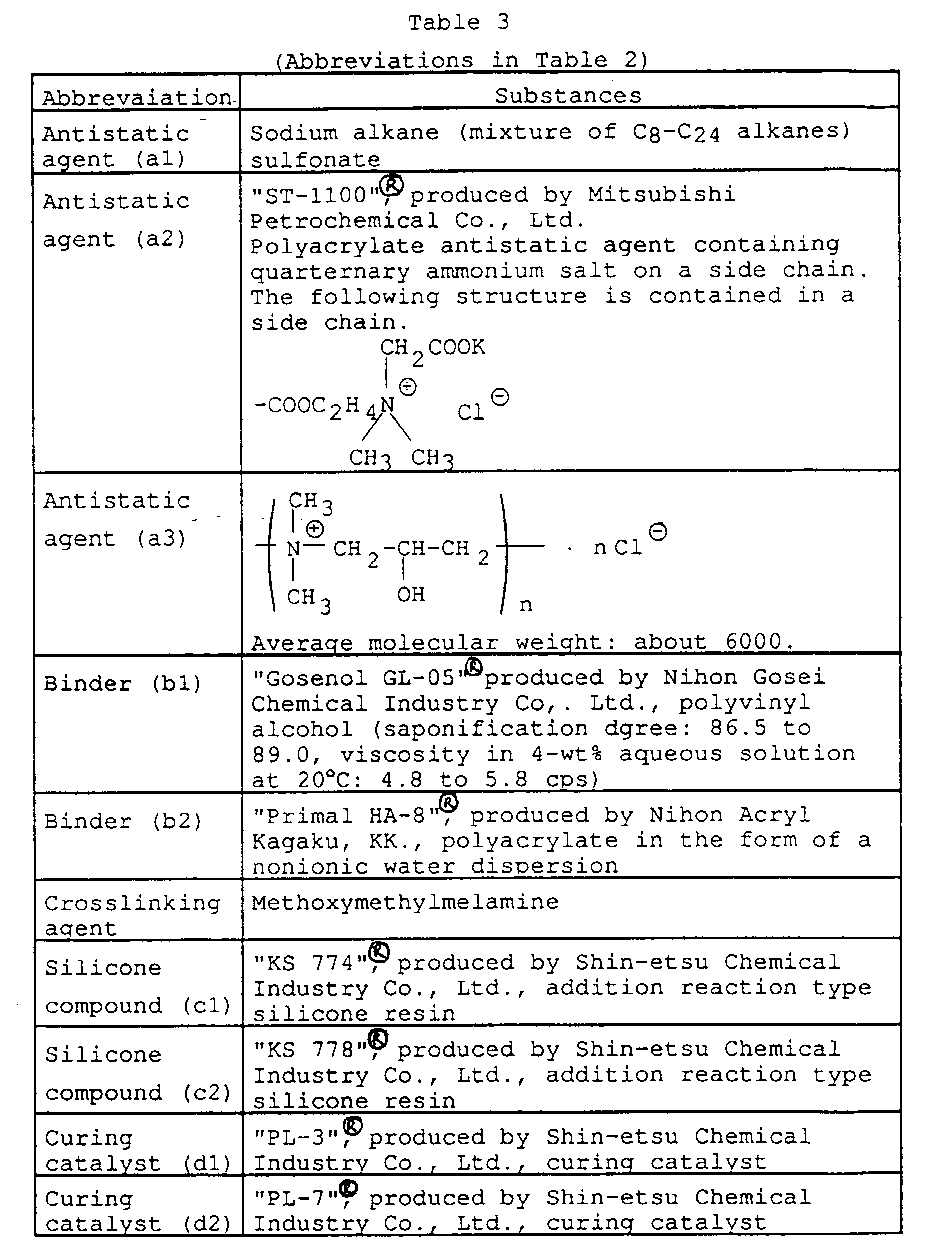

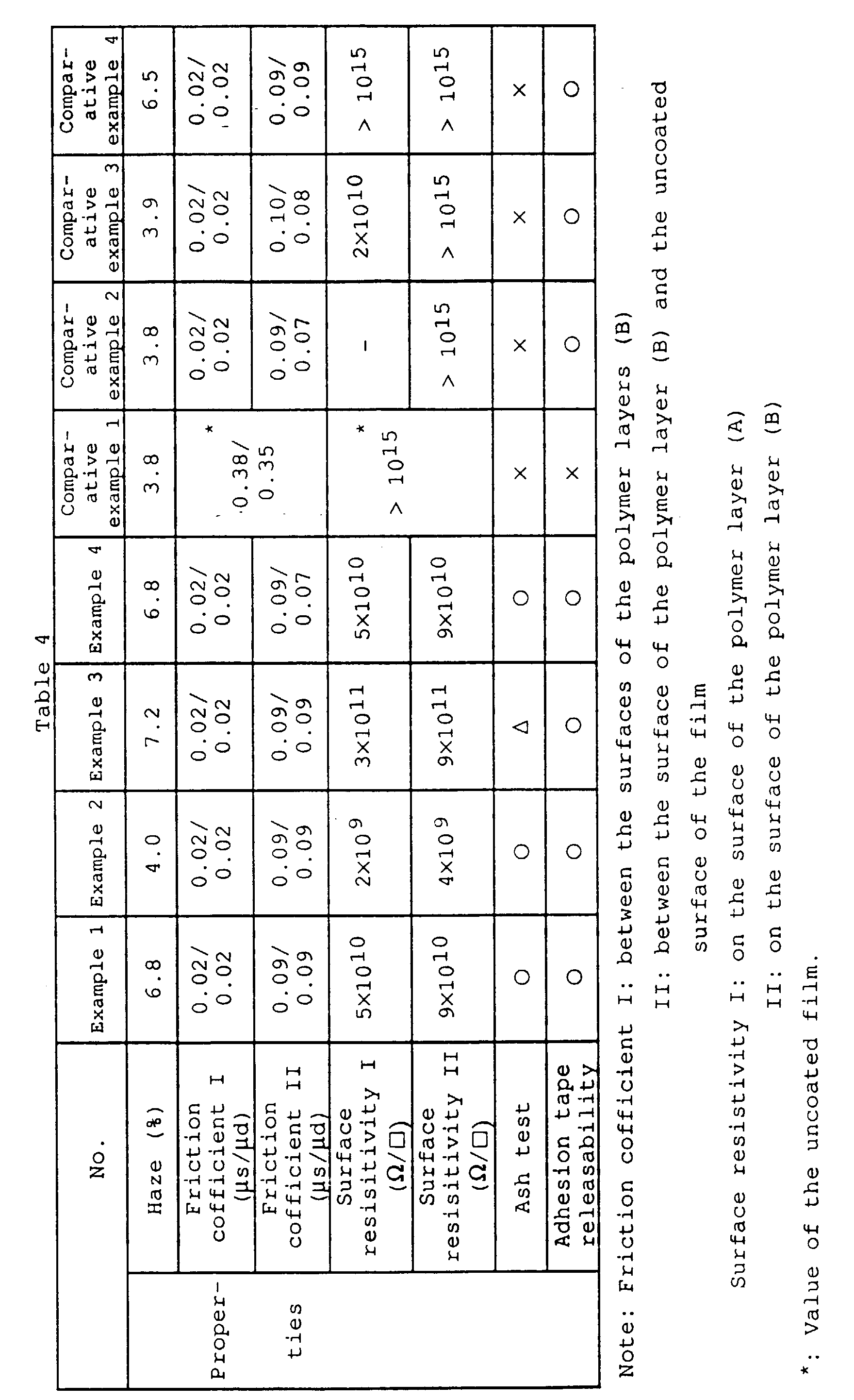

## Claims

1. A laminated polyester film which comprises (1) a film comprising a base polyester film and at least one polymer layer (A) comprising (a) a polymer having cationic nitrogens in the main chain thereof and (b) a binder polymer on one or both surfaces of said base polyester film, and (2) at least one polymer layer (B) comprising a silicone compound on one or both surfaces of said film comprising the base polyester film and said at least one polymer layer (A), wherein said binder polymer is one selected from the group consisting of water-soluble polymers and water-dispersible organic polymers, said water-soluble polymers is at least one selected from the group consisting of polyvinyl alcohol, polyacrylamide, polyalkylene glycol, polyalkylene imine, polyvinyl pyrrolidone, methyl cellulose, hydroxy ethyl cellulose, starch, saccharides and proteins, and said water-dispersible organic polymers is at least one selected from the group consisting of polyester, polyacrylate, polyurethane, polyamide, chlorine-containing polymers, polyolefin and styrene butadiene rubber.

2. The laminated polyester film according to claim 1, wherein the content of said silicone compound in said polymer layer (B) is 1 to 100 wt%.

3. The laminated polyester film according to claim 1, wherein said silicone compound is an organopolysiloxane having a three-dimensional crosslinked structure.

4. The laminated polyester film according to claim 1, wherein said polymer having cationic nitrogens in the main chain thereof is at least one polymer selected from the group consisting of ionene polymers which have respectively constitutional units represented by the following formula (I) or (II): 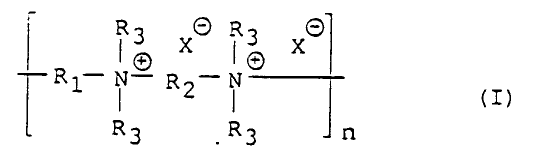 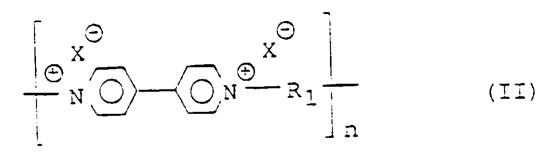 wherein X is bromine or chlorine; R₁ and R₂ independently represent alkylene groups, arylene groups, xylylene groups, divalent groups (A) derived from compounds selected from the group consisting of ethers, urea and derivatives thereof, piperadine and derivatives thereof, diacetoxypropane and derivatives thereof, and diethylbenzene, or divalent groups (B) derived from compounds selected from the group consisting of polyacrylates, polyesters, polyurethanes, polyolefins, halogenated polyolefins and polyethylene glycol; said alkylene groups, said arylene groups, said xylylene groups and said divalent groups (A) may be substituted by a hydroxy group or a monovalent group derived from a compound selected from the group consisting of esters, ethers, alcohols, amides, urethanes and ketones; R₃ represents methyl or ethyl and n is an integer.

5. The laminated polyester film according to claim 4, wherein said polymer having cationic nitrogens in the main chain thereof is at least one polymer selected from the group consisting of ionene polymers which have respectively constitutional units represented by the following formula (III): 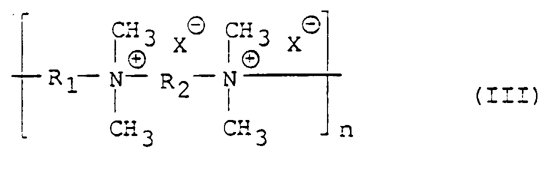 wherein X is bromine or chlorine; R₁ and R₂ independently represent C₁-C₄ alkylene groups, phenylene groups, xylylene groups, divalent groups derived from compounds selected from the group consisting of diethylethers and dipropylurea, and propylene groups substituted by a hydroxy group and n is an integer.

6. The laminated polyester film according to claim 1, wherein said polymer layer (A) is formed on one or both surfaces of said base polyester film by an in-line coating method which comprises stretching an amorphous polyester film monoaxially by 2 to 6 times at a temperature from 60 to 130°C by a roll stretching method, coating a coating solution comprising the polymer having cationic nitrogens in the main chain thereof and the binder polymer on one or two surfaces of the monoaxially stretched polyester film, and after optionally drying, stretching the resultant monoaxially stretched polyester film by 2 to 6 times at a temperature from 80 to 130°C in the direction perpendicular to the previous stretching direction and then subjecting to heat-treatment at a temperature from 150 to 250°C for 1 to 600 seconds.

7. A process for producing the laminated polyester film as defined in claim 1, which comprises the steps of:
stretching an amorphous polyester film monoaxially by 2 to 6 times at a temperature from 60 to 130°C by a roll stretching method,
coating a coating solution comprising said polymer having cationic nitrogens in the main chain thereof and said binder polymer on one or both surfaces of the monoaxially stretched polyester film,
drying optionally the coated monoaxially stretched polyester film, stretching the resultant monoaxially stretched polyester film by 2 to 6 times at a temperature from 80 to 130°C in the direction perpendicular to the previous stretching direction,
then subjecting to heat-treatment at a temperature from 150 to 250°C for 1 to 600 seconds to obtain said film comprising said base polyester film and said polymer layer (A) comprising said polymer having cationic nitrogens in the main chain thereof (a) and said binder polymer (b),
and coating a coating solution comprising said silicone compound to form said at least one polymer layer (B) on one of both surfaces of said obtained film.

## Patentansprüche

1. Laminierte Polyesterfolie, umfassend (1) eine Folie, die eine Polyestergrundfolie und mindestens eine Polymerschicht (A) umfaßt, die (a) ein Polymer mit kationischen Stickstoffatomen in dessen Hauptkette und (b) ein Bindemittelpolymer umfaßt, auf einer oder beiden Oberflächen der Polyestergrundfolie, und (2) mindestens eine Polymerschicht (B), die eine Siliconverbindung umfaßt, auf einer oder beiden Oberflächen der die Polyestergrundfolie und die mindestens eine Polymerschicht (A) umfassenden Folie, wobei das Bindemittelpolymer ein aus der wasserlösliche Polymere und wasserdispergierbare organische Polymere umfassenden Gruppe gewähltes ist, das wasserlösliche Polymer mindestens ein aus der Polyvinylalkohol, Polyacrylamid, Polyalkylenglykol, Polyalkylenimin, Polyvinylpyrrolidon, Methylcellulose, Hydroxyethylcellulose, Stärke, Saccharide und Proteine umfassenden Gruppe gewähltes ist, und das wasserdispergierbare organische Polymer mindestens ein aus der Poylester, Polyacrylat, Polyurethan, Polyamid, chlorhaltige Polymere, Polyolefin und Styrol-Butadien-Kautschuk umfassenden Gruppe gewähltes ist.

2. Laminierte Polyesterfolie nach Anspruch 1, wobei der Gehalt der Siliconverbindung in der Polymerschicht (B) 1 bis 100 Gew.-% beträgt.

3. Laminierte Polyesterfolie nach Anspruch 1, wobei die Siliconverbindung ein Organopolysiloxan mit einer dreidimensionalen vernetzten Struktur ist.

4. Laminierte Polyesterfolie nach Anspruch 1, wobei das Polymer mit kationischen Stickstoffatomen in dessen Hauptkette mindestens ein Polymer ist, gewählt aus der Ionenepolymere umfassenden Gruppe, welche jeweils Aufbaueinheiten der folgenden Formel (I) oder (II) aufweisen: 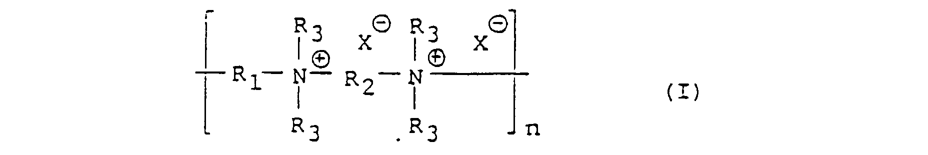 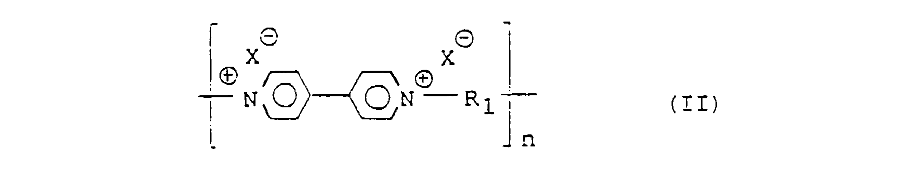 worin X Brom oder Chlor ist; R₁ und R₂ unabhängig voneinander Alkylengruppe, Arylengruppen, Xylylengruppen, zweiwertige Gruppen (A), welche aus Verbindungen abgeleitet sind, die aus der Ether, Harnstoff und Derivate hiervon, Piperadin und Derivate hiervon, Diacetoxypropan und Derivate hiervon und Diethylbenzol umfassenden Gruppe gewählt sind, oder zweiwertige Gruppen (B) bedeuten, welche aus Verbindungen abgeleitet sind, die aus der Polyacrylate, Polyester, Polyurethane, Polyolefine, halogenierte Polyolefine und Polyethylenglykol umfassenden Gruppe gewählt sind, wobei die Alkylengruppen, Arylengruppen, Xylylengruppen und die zweiwertigen Gruppen (A) durch eine Hydroxygruppe oder eine einwertige Gruppe, abgeleitet aus einer Verbindung, welche aus der Ester, Ether, Alkohole, Amide, Urethane und Ketone umfassenden Gruppe gewählt ist, substituiert sein können; R₃ Methyl oder Ethyl bedeutet und n eine ganze Zahl ist.

5. Laminierte Polyesterfolie nach Anspruch 4, wobei dasPolymer mit kationischen Stickstoffatomen in dessen Hauptkette mindestens ein Poylmer ist, gewählt aus der Ionenepolymere umfassenden Gruppe, welche jeweils Aufbaueinheiten der folgenden Formel (III) aufweisen: 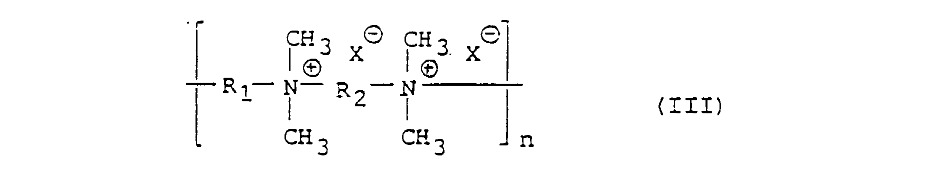 worin X Brom oder Chlor ist; R₁ und R₂ unabhängig voneinander C₁-C₄-Alkylengruppen, Phenylengruppen, Xylylengruppen, zweiwertige Gruppen, die aus Verbindungen abgeleitet sind, die aus der Diethylether und Dipropylharnstoff umfassenden Gruppe gewählt sind, und durch eine Hydroxygruppe substituierte Propylengruppen bedeuten, und n eine ganze Zahl ist.

6. Laminierte Polyesterfolie nach Anspruch 1, wobei die Polymerschicht (A) auf einer oder beiden Oberflächen der Polyestergrundfolie durch ein In-Line-Beschichtungsverfahren ausgebildet ist, welches das monoaxiale Recken einer amorphen Polyesterfolie um das zwei- bis sechsfache bei einer Temperatur von 60 bis 130°C durch ein Walzenreckverfahren, Aufbeschichten einer das Polymer mit kationischen Stickstoffatomen in dessen Hauptkette und das Bindemittelpolymer umfassenden Beschichtungslösung auf eine oder zwei Oberflächen der monoaxial gereckten Polyesterfolie, und nach dem wahlweisen Trocknen, das Recken der resultierenden monoaxial gereckten Polyesterfolie um das zwei- bis sechsfache bei einer Temperatur von 80 bis 130°C in einer zur vorausgehenden Reckrichtung senkrechten Richtung und danach das Unterziehen einer Wärmebehandlung bei einer Temperatur von 150 bis 250°C während 1 bis 600 Sekunden umfaßt.

7. Verfahren zur Herstellung der laminierten Polyesterfolie nach Anspruch 1, umfassend die Schritte
monoaxiales Recken einer amorphen Polyesterfolie um das zwei- bis sechsfache bei einer Temperatur von 60 bis 130°C durch ein Walzenreckverfahren,
Aufbeschichten einer das Polymer mit kationischen Stickstoffatomen in dessen Hauptkette und das Bindemittelpolymer umfassenden Beschichtungslösung auf eine oder beide Oberflächen der monoaxial gereckten Polyesterfolie,
wahlweises Trocknen der beschichteten, monoaxial gereckten Polyesterfolie,
Recken der resultierenden monoaxial gereckten Polyesterfolie um das zwei- bis sechsfache bei einer Temperatur von 80 bis 130°C in einer zu der vorausgehenden Reckrichtung senkrechten Richtung,
danach Unterziehen einer Wärmebehandlung bei einer Temperatur von 150 bis 250°C während 1 bis 600 Sekunden, um die Folie zu erhalten, welche die Polyestergrundfolie und die das Polymer mit kationischen Stickstoffatomen in der Hauptkette (a) und das Bindemittelpolymer (b) umfassende Polymerschicht (A) umfaßt,
und Aufbeschichten einer die Siliconverbindung umfassenden Beschichtungslösung zur Ausbildung der mindestens einen Polymerschicht (B) auf einer oder beiden Oberflächen der erhaltenen Folie.

## Revendications

1. Film de polyester stratifié qui comprend (1) un film comprenant un film de polyester de base et au moins une couche polymérique (A) comprenant (a) un polymère ayant des azotes cationiques dans sa chaîne principale et (b) un polymère liant sur une surface ou sur les deux surfaces dudit film de polyester de base, et (2) au moins une couche polymérique (B) comprenant un composé silicone sur une surface ou sur les deux surfaces dudit film comprenant le film de polyester de base et ladite ou lesdites couches polymériques (A), dans lequel ledit polymère liant est un polymère choisi dans le groupe consistant en les polymères hydrosolubles et les polymères organiques dispersables dans l'eau, lesdits polymères hydrosolubles étant constitués par au moins un polymère choisi dans le groupe consistant en le poly(alcool vinylique), le polyacrylamide, un polyalkylèneglycol, une polyalkylène-imine, la polyvinylpyrrolidone, la méthylcellulose, l'hydroxyéthylcellulose, l'amidon, les saccharides et les protéines, et lesdits polymères organiques dispersables dans l'eau étant constitués par au moins un polymère choisi dans le groupe consistant en le polyester, le polyacrylate, le polyuréthane, le polyamide, les polymères contenant du chlore, une polyoléfine et le caoutchouc styrène-butadiène.

2. Film de polyester stratifié selon la revendication 1, dans lequel la teneur dudit composé silicone dans ladite couche polymérique (B) est de 1 à 100% en masse.

3. Film de polyester stratifié selon la revendication 1, dans lequel ledit composé silicone est un organopolysiloxane ayant une structure réticulée tridimensionnelle.

4. Film de polyester stratifié selon la revendication 1, dans lequel ledit polymère ayant des azotes cationiques dans sa chaîne principale est au moins un polymère choisi dans le groupe consistant en les polymères ionènes qui ont respectivement des unités de constitution représentées par la formule (I) ou (II) suivante : 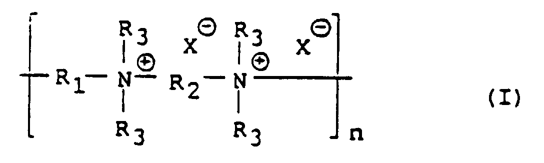 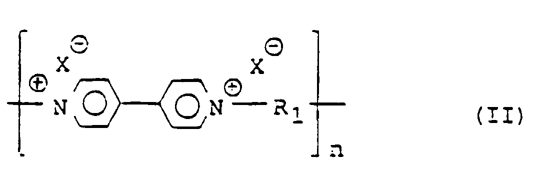 où X est le brome ou le chlore, R₁ et R₂ représentent indépendamment des groupes alkylène, des groupes arylène, des groupes xylylène, des groupes divalents (A) dérivés de composés choisis dans le groupe consistant en les éthers, l'urée et ses dérivés, la pipéridine et ses dérivés, le diacétoxypropane et ses dérivés, et le diéthylbenzène, ou des groupes divalents (B) dérivés de composés choisis dans le groupe consistant en les polyacrylates, les polyesters, les polyuréthanes, les polyoléfines, les polyoléfines halogénées et le polyéthylèneglycol, lesdits groupes alkylène, lesdits groupes arylène, lesdits groupes xylylène et lesdits groupes divalents (A) pouvant être substitués par un groupe hydroxyle ou un groupe monovalent dérivé d'un composé choisi dans le groupe consistant en les esters, les éthers, les alcools, les amides, les uréthanes et les cétones, R₃ représente méthyle ou éthyle et n est un entier.

5. Film de polyester stratifié selon la revendication 4, dans lequel ledit polymère ayant des azotes cationiques dans sa chaîne principale est au moins un polymère choisi dans le groupe consistant en les polymères ionènes qui ont respectivement des unités de constitution représentées par la formule (III) suivante : 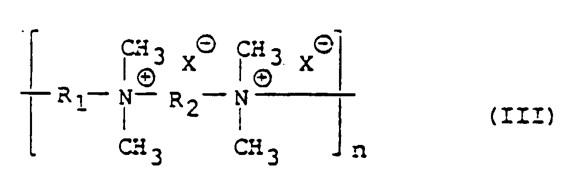 où X est le brome ou le chlore, R₁ et R₂ représentent indépendamment des groupes alkylène en C₁-C₄, des groupes phénylène, des groupes xylylène, des groupes divalents dérivés de composés choisis dans le groupe consistant en les diéthyléthers et la dipropylurée, et des groupes propylène substitués par un groupe hydroxyle et n est un entier.

6. Film de polyester stratifié selon la revendication 1, dans lequel ladite couche polymérique (A) est formée sur une surface ou sur les deux surfaces dudit film de polyester de base par un procédé de revêtement en ligne qui comprend l'étirage monoaxial d'un film de polyester amorphe à raison de 2 à 6 fois à une température de 60 à 130°C par un procédé d'étirage au rouleau, l'application en revêtement d'une solution de revêtement comprenant le polymère ayant des azotes cationiques dans sa chaîne principale et le polymère liant sur une surface ou sur les deux surfaces du film de polyester étiré monoaxialement, puis éventuellement le séchage, l'étirage du film de polyester étiré monoaxialement résultant à raison de 2 à 6 fois à une température de 80 à 130°C dans le sens perpendiculaire au sens d'étirage précédent et ensuite la soumission à un traitement thermique à une température de 150 à 250°C pendant 1 à 600 s.

7. Procédé pour produire le film de polyester stratifié tel que défini dans la revendication 1, qui comprend les étapes consistant à :
étirer monoaxialement à raison de 2 à 6 fois un film de polyester amorphe à une température de 60 à 130°C par un procédé d'étirage au rouleau,
appliquer en revêtement une solution de revêtement comprenant ledit polymère ayant des azotes cationiques dans sa chaîne principale et ledit polymère liant sur une surface ou sur les deux surfaces du film de polyester étiré monoaxialement,
sécher éventuellement le film de polyester étiré monoaxialement revêtu,
étirer à raison de 2 à 6 fois le film de polyester étiré monoaxialement résultant à une température de 80 à 130°C dans le sens perpendiculaire au sens d'étirage précédent,
puis soumettre à un traitement thermique à une température de 150 à 250°C pendant 1 à 600 s pour obtenir ledit film comprenant ledit film de polyester de base et ladite couche polymérique (A) comprenant ledit polymère ayant des azotes cationiques dans sa chaîne principale (a) et ledit polymère liant (b),
et appliquer en revêtement une solution de revêtement comprenant ledit composé silicone pour former ladite ou lesdites couches polymériques (B) sur une surface ou sur les deux surfaces dudit film obtenu.
